# EUROPÄISCHE PATENTANMELDUNG

(11) **EP 4 781 875 A1**
(43) Veröffentlichungstag der Anmeldung: **29.07.2026**
(21) Anmeldenummer: 25215403.4
(22) Anmeldetag: 12.11.2025
(51) Int. Cl.: A47J 31/46

(54) **GETRÄNKEAUSLASS**

(30) Priorität: 22.01.2025 DE 102025000239
(71) Anmelder: Eugster/Frismag AG, 8580 Amriswil (CH)
(72) Erfinder: EBERLE, Rainer, 9000 St. Gallen (CH); WAGNER, Christian, 8280 Kreuzlingen (CH)
(74) Vertreter: Patent- und Rechtsanwälte Behrmann Wagner PartG mbB

(57) **Zusammenfassung**

Die Erfindung betrifft einen Getränkeauslass, zur Verwendung an einer Getränkezubereitungsvorrichtung, insbesondere eine Kaffee- oder Espressomaschine, mit einem Getränkeauslasskanal, umfassend wenigstens eine Getränkeauslassdüse (2), wobei der Getränkeauslass (1) eine erste Fluidleitung (4) zwischen einem ersten Eingang (3) zur Verbindung mit dem Getränkeauslasskanal und der Getränkeauslassdüse (2) ausbildet, und wobei die erste Fluidleitung (4) zur Führung eines Getränks ausgebildet ist, wobei die wenigstens eine Getränkeauslassdüse (2) eine wenigstens abschnittsweise zu einer Auslassöffnung (5) hin konvergierende Innengeometrie aufweist, zur Bereitstellung eines weitestgehend tropffreien Getränkestrahls.

## Beschreibung

Die vorliegende Erfindung betrifft einen Getränkeauslass, zur Verwendung an einer Getränkezubereitungsvorrichtung, insbesondere eine Kaffee- oder Espressomaschine, nach dem Oberbegriff des Anspruch 1. Des Weiteren betrifft die Erfindung eine Auslassbaugruppe nach dem Oberbegriff des Anspruch 9, eine Getränkezubereitungsvorrichtung nach dem Oberbegriff des Anspruch 13 und ein Verfahren zum Betrieb eines Getränkeauslasses an einer Getränkezubereitungsvorrichtung, insbesondere eine Kaffee- oder Espressomaschine, nach dem Oberbegriff von Anspruch 14.

Aus dem Stand der Technik sind Getränkeauslässe bekannt, bei welchen ein Getränk, insbesondere Kaffee oder Espresso, durch eine Getränkeauslassdüse mit rundem Querschnitt ausgegeben wird. Derartige Getränkeauslässe sind regelmäßig das letzte Bauteil, mit dem Getränke vor der Abgabe in einen Getränkebehälter, beispielsweise einen Becher, in Kontakt kommen, wenn die Getränke nach der Herstellung eine Getränkezubereitungsvorrichtung verlassen.

Nachteilig an einem solchen runden Querschnitt ist, dass bei einer Ausbildung der Getränkeauslassdüse mit einem kleinen Durchmesser nur Getränkestrahlen mit niedriger Strömungsgeschwindigkeit kontrolliert ausgegeben werden können, während es bei Getränkestrahlen mit hoher Strömungsgeschwindigkeit beim Aufprall auf den Boden des Getränkebehälters zu einer Blasen- und Spritzerbildung kommt. Hierdurch wird die Umgebung des Getränkeauslasses verunreinigt und eine zum Beispiel bei Kaffee oder Espresso gewünschte Schaumschicht, die sogenannte Crema, gegebenenfalls zerstört. Bei Getränkeauslassdüsen welche mit großem Querschnitt ausgebildet werden, werden wiederum nur Getränkestrahlen mit hoher Strömungsgeschwindigkeit kontrolliert ausgegeben, während eine niedrige Strömungsgeschwindigkeit zu einem Anhaften des Getränkestrahls an der Getränkeauslassdüse und somit zu einem frühzeitigen Abreißen und Tropfen des Getränkestrahls führt. Die aus verhältnisweise hoher Höhe in den Getränkebehälter fallenden Tropfen, lösen dabei bei ihrem Aufprall in dem gesammelten Getränk Interferenzen aus, welche ebenso zu einer Spritzerbildung führen und gegebenenfalls die Crema zerstören.

Vor diesem Hintergrund liegt die Aufgabe der Erfindung darin die Nachteile im Stand der Technik zu überwinden und einen Getränkeauslass vorzuschlagen, welcher eine verbesserte Ausgabe eines Getränkestrahls bei verschiedenen Strömungsgeschwindigkeiten ermöglicht.

Diese Aufgabe wird mit einem Getränkeauslass mit den Merkmalen des Anspruchs 1 gelöst. Weiterhin wird die Aufgabe durch eine Auslassbaugruppe nach Anspruch 9, eine Getränkezubereitungsvorrichtung nach Anspruch 13 und ein Verfahren zum Betrieb eines Getränkeauslasses nach Anspruch 14 gelöst.

Vorteilhafte Ausführungsformen des erfindungsgemäßen Getränkeauslasses, der Auslassbaugruppe, der Getränkezubereitungsvorrichtung und des Verfahrens zum Betrieb eines Getränkeauslasses sind Gegenstand der nachfolgenden Beschreibung und Figurenbeschreibung, sowie der Unteransprüche.

Alle nachfolgend vorrichtungsmäßig offenbarten Merkmale sollen auch als entsprechend verfahrensmäßig offenbart und beanspruchbar gelten und umgekehrt.

Der Getränkeauslass ist, wie bereits vorhergehend erwähnt, für eine Verwendung an einer Getränkezubereitungsvorrichtung, insbesondere eine Kaffee- oder Espressomaschine, mit einem, bevorzugt mit einer Brühkammer fluidleitend verbundenen, Getränkeauslasskanal vorgesehen, wobei der Getränkeauslass wenigstens eine Getränkeauslassdüse umfasst, und wobei der Getränkeauslass eine erste Fluidleitung zwischen einem ersten Eingang zur Verbindung mit dem Getränkeauslasskanal und der Getränkeauslassdüse ausbildet, und wobei die erste Fluidleitung zur Führung eines Getränks ausgebildet ist.

Erfindungsgemäß ist dabei vorgesehen, dass die wenigstens eine Getränkeauslassdüse eine wenigstens abschnittsweise zu einer Auslassöffnung hin konvergierende Innengeometrie, zur Bereitstellung eines weitestgehend tropffreien Getränkestrahls aufweist.

In anderen Worten ausgedrückt ist die Getränkeauslassdüse mit einer sich wenigstens abschnittsweise zu einer Auslassöffnung hin verjüngenden Innengeometrie ausgebildet. Die Innengeometrie kann hierbei vorteilhaft kegelförmig zusammenlaufenden ausgebildet sein, wobei besonders bevorzugt eine Ausführung ist, bei welcher ausgehend von einem runden oder ovalen Querschnitt zwei sich gegenüberliegende Flanken geneigt, insbesondere zu einem spitzen oder stumpfen Winkel zusammenlaufend, auf die Auslassöffnung hinführend ausgebildet sind, derart, dass eine annähernd rechteckige Auslassöffnung ausgebildet wird.

Die vorliegende Erfindung hat erkannt, dass durch die konvergierende Innengeometrie der Getränkeauslassdüse ein Tropfen weitestgehend vermieden werden kann. Dies wird ermöglicht, da der Getränkestrahl durch die Innengeometrie kompakt aus der Auslassöffnung austritt und durch die reduzierte Breite der Auslassdüse weniger an dieser anhaftet. Des Weiteren wird durch die konvergierende Innengeometrie der Strahlwinkel angepasst, wodurch der Getränkestrahl je nach Strömungsgeschwindigkeit fokussiert oder verbreitert wird. Hierdurch wird insbesondere die Zerfallslänge des Getränkestrahls maßgeblich erhöht, also die Strecke über welche der Getränkestrahl nach Austritt aus der Auslassöffnung kontinuierlich, mit ungestörter Oberfläche erhalten bleibt, bevor er in Tropfen zerfällt. Durch die Vermeidung der Tropfenbildung wird somit vorteilhaft ein Aufprallen der Tropfen in ein bereits in einem Getränkebehälter befindliches Getränk aus relativ großer Höhe vermieden, wodurch eine Spritzerbildung verhindert und die potentielle Crema des Getränks nicht durch die entstehenden Interferenzen zerstört wird.

Besonders vorteilhaft ist die Innengeometrie der Getränkeauslassdüse derart ausgebildet, dass der austretende Getränkestrahl eine spiralförmige und/oder in sich verwundene und/oder als verwundene Doppelspirale ausgebildete Strömungsbahn annimmt, wodurch die Oberflächenspannung und somit Zerfallslänge des Getränkestrahls noch weiter verbessert wird. Dies kann rein beispielhaft durch eine Anordnung von Hindernissen, elektromagnetischen Feldern oder die Innengeometrie selber erreicht werden.

Gemäß einer ersten vorteilhaften Ausführungsform kann vorgesehen sein, dass eine Heißwasserauslassdüse umfasst ist, wobei der Getränkeauslass eine zweite Fluidleitung zwischen einem zweiten Eingang zur Verbindung mit einem Heißwasserkanal und der Heißwasserauslassdüse ausbildet, wobei die Heißwasserauslassdüse bevorzugt eine wenigstens abschnittsweise zu einer Auslassöffnung hin konvergierende Innengeometrie aufweist. Hierdurch kann bevorzugt ein Getränkeauslass sowohl für die Ausgabe eines gebrühten Getränks, zum Beispiel Kaffee und/oder Espresso, als auch Heißwasser verwendet werden. Durch die vorteilhaft konvergierende Innengeometrie der Heißwasserauslassdüse kann der Heißwasserstrahl beruhigt und somit ein Spritzen des heißen Wassers vermieden werden.

Gemäß einer weiteren vorteilhaften Ausführungsform kann vorgesehen sein, dass die Getränkeauslassdüse und/oder Heißwasserauslassdüse gegenüber einem Grundkörper des Getränkeauslasses erhaben und/oder dem Grundkörper aufsitzend ausgebildet sind. Bevorzugt sind die Getränkeauslassdüse und/oder Heißwasserauslassdüse wenigstens annähernd senkrecht zu einer Grundfläche des Grundkörpers angeordnet. Durch diese Ausführung wird die Auslassöffnung gegenüber dem Grundkörper beabstandet, wodurch vorteilhaft vermieden werden kann, dass das ausgegebene Getränk und/oder Heißwasser an dem Grundkörper anhaftet, wodurch die Kompaktheit des Getränkestrahls und/oder Heißwasserstrahls verringert würde. Des Weiteren kann hierdurch eine räumliche Distanz zu weiteren Komponenten der Getränkezubereitungsvorrichtung geschaffen werden, um eine Verschmutzung von diesen zu vermeiden.

Gemäß einer weiteren vorteilhaften Ausführungsform kann vorgesehen sein, dass der Getränkeauslass wenigstens teilweise, insbesondere vollständig, aus einem Silikon und/oder einem hydrophoben Material ausgebildet ist. Diese Ausführung ist besonders bevorzugt, um die Anhaftung des Getränkestrahls an dem Getränkeauslass und/oder der Getränkeauslassdüse und/oder Heißwasserauslassdüse noch weiter zu verringern. Alternativ kann der Getränkeauslass wenigstens teilweise, insbesondere vollständig, mit Silikon und/oder einem hydrophoben Material beschichtet ausgebildet sein. Alternativ zu Silikon kann zum Beispiel auch ein Polymer als Material vorgesehen werden.

Gemäß einer weiteren vorteilhaften Ausführungsform kann vorgesehen sein, dass die Innengeometrie der Getränkeauslassdüse und/oder Heißwasserauslassdüse derart ausgebildet ist, dass der Innendurchmesser in einem ersten Abschnitt gleichbleibend und in einem zweiten Abschnitt zur Auslassöffnung hin konvergierend ausgebildet ist. In anderen Worten ausgedrückt, wird die Innengeometrie vorteilhaft durch einen zylindrischen Abschnitt und einen konvergierenden Abschnitt ausgebildet. Der zylindrische Abschnitt kann hierbei vorteilhaft wenigstens die Hälfte der Länge der Getränkeauslassdüse und/oder Heißwasserauslassdüse ausmachen, wobei die Länge anpassbar ist, um eine gewünschte Beabstandung der Auslassöffnung/en von dem Grundkörper des Getränkeauslasses und/oder die Erhabenheit der Getränkeauslassdüse und/oder Heißwasserauslassdüse über den Grundkörper zu erreichen.

Gemäß einer weiteren vorteilhaften Ausführungsform kann vorgesehen sein, dass die Getränkeauslassdüse und/oder Heißwasserauslassdüse mit einer abschnittsweise zu Auslassöffnung hin konvergierenden Außengeometrie, insbesondere mit sich zur Auslassöffnung hin verengenden, bevorzugt scharfkantigen, Flanken, ausgebildet sind. Besonders vorteilhaft verlaufen die Flanken der Außengeometrie parallel zu den Flanken der Innengeometrie. Hierdurch wird besonders vorteilhaft eine spitz zulaufende Außengeometrie der Getränkeauslassdüse und/oder Heißwasserauslassdüse erreicht, wobei insbesondere in Kombination mit der sich verjüngenden Innengeometrie die Wandstärke im Bereich der Auslassöffnung verringert und/oder der Flüssigkeits-Kontaktwinkel erhöht wird. Somit wird ein Anhaften und/oder seitliches Abfließen des Getränkestrahls, sowie eine Tropfenbildung an der Auslassöffnung durch eine Oberflächenbenetzung, vermieden. In einer besonders bevorzugten Ausführungsform, ist die Getränkeauslassdüse und/oder Heißwasserauslassdüse insgesamt als Ventil ausgebildet.

Gemäß einer weiteren vorteilhaften Ausführungsform kann vorgesehen sein, dass der Grundkörper eine, insbesondere wannenförmige, bevorzugt die Getränkeauslassdüse umfangseitig umgebende, Einformung aufweist. Die Einformung ist hierbei derart ausgebildet, dass eine Tiefenerstreckung im montierten Zustand des Getränkeauslasses entgegen der Schwerkraft angeordnet ist. Hierdurch wird vorteilhaft einerseits der Freiraum um die Getränkeauslassdüse vergrößert und im weitesten Sinne eine Überlaufzone geschaffen. Damit werden Kapillarkräfte, die eine Tropfenbildung begünstigen minimiert. Die bevorzugt wannenförmig eingelassene Einformung ist vorteilhaft mit abgerundeten Wannenrändern ausgebildet, wodurch die sich durch Oberflächenhaftung im Bereich der Getränkeauslassdüse sammelnden Getränkereste entlang der Wannenränder geführt werden und bei Erreichen der äußeren Kante der Wannenränder, durch eine Reduzierung der Haftungsfläche und gegebenenfalls bei Erreichen eines Gewichtsgrenzwerts, zum Beispiel in eine Tropfschale der Getränkezubereitungsvorrichtung, abtropfen. Die Überlaufzone verhindert somit, dass Getränkereste welche sich an der Getränkeauslassdüse sammeln, oder beim Herausnehmen des Getränkebehälters an der Getränkeauslassdüse oder dem Getränkeauslass entstehen, die Heißwasserauslassdüse oder andere nebenstehend angeordnete Komponenten der Getränkezubereitungsvorrichtung verschmutzen.

Gemäß einer weiteren vorteilhaften Ausführungsform kann vorgesehen sein, dass die Getränkeauslassdüse entlang einer Längenrichtung länger als die Heißwasserauslassdüse und/oder gegenüber der Heißwasserauslassdüse hervorstehend ausgebildet ist. Die Auslassöffnungen der Getränkeauslassdüse und Heißwasserauslassdüse werden somit vorteilhaft auf verschiedenen Höhenebenen angeordnet, wodurch eine Verschmutzung der Heißwasserauslassdüse durch das aus der Getränkeauslassdüse ausgegebene Getränk verhindert wird.

Weiterhin wird die oben genannte Aufgabe durch eine Auslassbaugruppe gelöst, zur Verwendung an einer Getränkezubereitungsvorrichtung, insbesondere eine Kaffee- oder Espressomaschine, mit einem, bevorzugt mit einer Brühkammer fluidleitend verbundenen, Getränkeauslasskanal, umfassend wenigstens zwei Getränkeauslässe nach einer der oben beschriebenen Ausführungsformen.

Zur Vermeidung unnötiger Wiederholung wird im Hinblick auf die vorteilhaften Wirkungen, sowie die vorteilhaften Ausführungen der Auslassbaugruppe auf den oben beschriebenen Getränkeauslass verwiesen.

Zusammengefasst ermöglicht die erfindungsgemäße Auslassbaugruppe eine verbesserte Ausgabe eines Getränkestrahls bei verschiedenen Strömungsgeschwindigkeiten.

Gemäß einer ersten vorteilhaften Ausführungsform kann vorgesehen sein, dass die Getränkeauslässe und/oder Grundkörper monolithisch miteinander verbunden ausgebildet sind. Besonders vorteilhaft sind die Grundkörper einteilig über einen Steg miteinander verbunden ausgebildet. Hierdurch kann vorteilhaft der Fertigungs- und Montageaufwand reduziert werden, wobei der Steg besonders bevorzugt derart ausgebildet ist, dass eine Trennung der Grundkörper vor der Montage an der Getränkezubereitungsvorrichtung möglich ist.

Besonders bevorzugt ist eine mehrteilige Ausführung der Auslassbaugruppe, wobei die Grundkörper der Getränkeauslässe mit den Getränkeauslassdüsen und/oder Heißwasserauslassdüsen einteilig und/oder monolithisch ausgebildet sind und zum Beispiel durch Verschweißen oder Kleben mit einem Fluidkörper, an und/oder in welchem wenigstens abschnittsweise die erste und zweite Fluidführung und der erste und zweite Eingang ausgebildet sind, verbunden werden.

Gemäß einer ersten vorteilhaften Ausführungsform kann vorgesehen sein, dass die erste und/oder zweite Fluidleitung eine Mehrzahl von Fluidpfaden ausbildet, insbesondere eine Anzahl von Fluidpfaden welche der Anzahl von Getränkeauslassdüsen und/oder Heißwasserauslassdüsen entspricht, welche ausgehend von dem ersten und/oder zweiten Eingang ausgebildet sind oder von jeweils eigenständigen Eingängen zur Verbindung mit dem Getränkeauslasskanal und/oder Heißwasserkanal ausgebildet sind. In anderen Worten ausgedrückt ist die Auslassbaugruppe vorteilhaft derart ausgebildet, dass über wenigstens zwei Getränkeauslassdüsen und/oder Heißwasserauslassdüsen das Getränk und/oder Heißwasser ausgegeben wird.

Gemäß einer weiteren bevorzugten Ausführungsform, ist die Auslassbaugruppe mit symmetrischen Fluidpfaden ausgebildet. Hierdurch wird besonders vorteilhaft eine ebenso symmetrische Getränkeausgabe, hinsichtlich des Flüssigkeitsvolumens und/oder der Flussgeschwindigkeit, an der Mehrzahl der Getränkeauslassdüsen erreicht.

Besonders bevorzugt ist die Auslassbaugruppe insgesamt annähernd hufeisenförmig und/oder U-förmig ausgebildet, wobei der erste Eingang, welcher bevorzugt zentral in der Kurve des Hufeisens und/oder der U-Form angeordnet ist, mit dem Getränkeauslasskanal fluidleitend verbindbar ist und die erste Fluidleitung sich in zwei spiegelsymmetrische Fluidpfade entlang der Arme des Hufeisens und/oder der U-Form aufteilt, welche in ihrem Endbereich jeweils in einer Getränkeauslassdüse münden. Für die Führung des Heißwassers sind bevorzugt zwei zweite Eingänge vorgesehen, welche jeweils mit dem Heißwasserkanal und/oder Heißwasserkanälen fluidleitend verbindbar sind, wobei das Heißwasser über jeweils einen eigenständigen Fluidpfad der zweiten Fluidleitung zu der Heißwasserauslassdüse geführt wird. In anderen Worten ausgedrückt ist die erste Fluidleitung bevorzugt mit einem ersten Eingang ausgebildet, von welchem das Getränk durch eine Gabelung auf zwei Fluidpfade geführt wird und die zweite Fluidleitung mit zwei unabhängigen, bevorzugt parallelen, Fluidpfaden mit jeweils unabhängigem Eingang.

Weiterhin wird die oben genannte Aufgabe durch eine Getränkezubereitungsvorrichtung, insbesondere Kaffeemaschine und/oder Espressomaschine, mit einem, bevorzugt mit einer Brühkammer fluidleitend verbundenen, Getränkeauslasskanal, gelöst, umfassend einen Getränkeauslass und/oder eine Auslassbaugruppe nach einer der oben beschriebenen Ausführungsformen.

Zur Vermeidung unnötiger Wiederholung wird im Hinblick auf die vorteilhaften Wirkungen, sowie die vorteilhaften Ausführungen der Getränkezubereitungsvorrichtung auf den oben beschriebenen Getränkeauslass und die Auslassbaugruppe verwiesen.

Zusammengefasst ermöglicht die erfindungsgemäße Getränkezubereitungsvorrichtung eine verbesserte Ausgabe eines Getränkestrahls bei verschiedenen Strömungsgeschwindigkeiten.

Weiterhin wird die oben genannte Aufgabe durch ein Verfahren zum Betrieb eines Getränkeauslasses, insbesondere nach einer der vorhergehend beschriebenen Ausführungsformen, an einer Getränkezubereitungsvorrichtung, insbesondere eine Kaffee- oder Espressomaschine, mit einem, bevorzugt mit einer Brühkammer fluidleitend verbundenen, Getränkeauslasskanal, gelöst, umfassend ein Verbinden des Getränkeauslasskanals mit wenigstens einer Getränkeauslassdüse, durch eine erste Fluidleitung zwischen einem ersten Eingang zur Verbindung mit dem Getränkeauslasskanal und der Getränkeauslassdüse, und ein Führen eines Getränks durch die erste Fluidleitung.

Erfindungsgemäß ist dabei ein Ausgeben eines weitestgehend tropffreien Getränkestrahls vorgesehen, durch eine wenigstens abschnittsweise zu einer Auslassöffnung hin konvergierende Innengeometrie der Getränkeauslassdüse.

Zur Vermeidung unnötiger Wiederholung wird im Hinblick auf die vorteilhaften Wirkungen, sowie die vorteilhaften Ausführungen des Verfahrens zum Betrieb eines Getränkeauslasses auf den oben beschriebenen Getränkeauslass, die Auslassbaugruppe und die Getränkezubereitungsvorrichtung verwiesen.

Zusammengefasst ermöglicht das erfindungsgemäße Verfahren eine verbesserte Ausgabe eines Getränkestrahls bei verschiedenen Strömungsgeschwindigkeiten.

Gemäß einer ersten vorteilhaften Ausführungsform kann ein Verbinden eines Heißwasserkanals mit wenigstens einer Heißwasserauslassdüse vorgesehen sein, durch eine zweite Fluidleitung zwischen einem zweiten Eingang zur Verbindung mit dem Heißwasserkanal und der Heißwasserauslassdüse, und ein Führen des Heißwassers durch die zweite Fluidleitung und ein Ausgeben eines weitestgehend tropffreien Heißwasserstrahls, durch eine wenigstens abschnittsweise zu einer Auslassöffnung hin konvergierende Innengeometrie einer Heißwasserdüse. Hierdurch kann bevorzugt zusätzlich zu der Ausgabe eines gebrühten Getränks auch Heißwasser ausgegeben werden. Durch die vorteilhaft konvergierende Innengeometrie der Heißwasserauslassdüse kann der Heißwasserstrahl beruhigt und vorteilhaft ein Spritzen des heißen Wassers vermieden werden.

Nachfolgend wird die vorliegende Erfindung anhand von lediglich schematischen, beispielhafte Ausführungsformen zeigenden Zeichnungen näher erläutert.
- Fig. 1: Ansicht auf die Unterseite eines Getränkeauslasses in einer ersten Ausführungsform
- Fig. 2a: Seitenansicht auf eine Auslassbaugruppe in einer ersten Ausführungsform
- Fig. 2b: Ansicht auf die Unterseite einer Auslassbaugruppe in einer ersten Ausführungsform

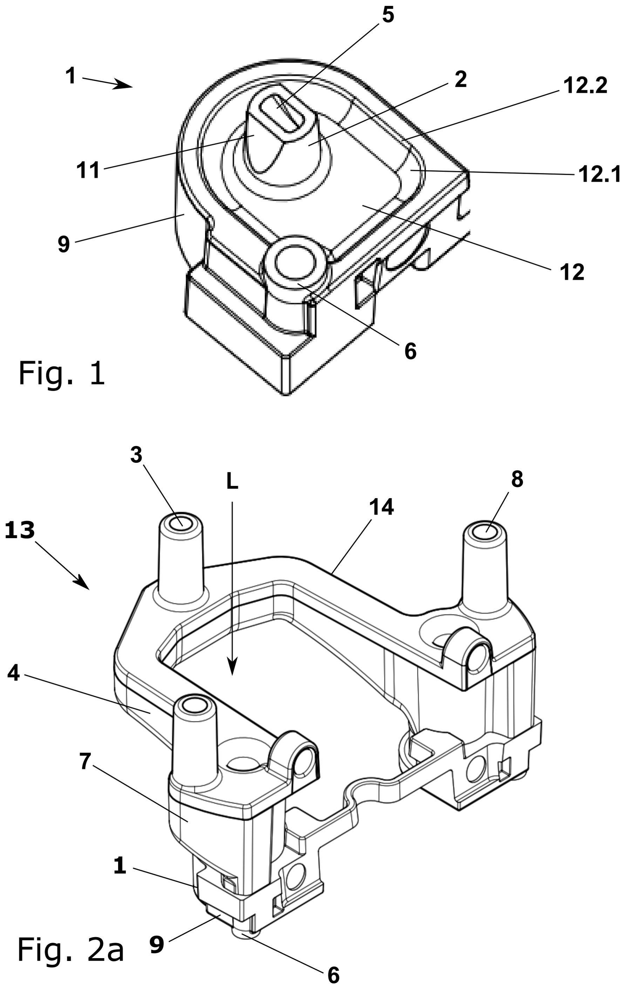

In der Fig. 1 ist ein Getränkeauslass 1 mit einem Grundkörper 9 dargestellt, auf welchem eine Getränkeauslassdüse 2 erhaben aufsitzend und annähernd senkrecht zu der Grundfläche des Grundkörpers 9 angeordnet, ausgebildet ist. Die Getränkeauslassdüse 2 weist eine auf eine Auslassöffnung 5 hin konvergierende und/oder sich verjüngende Innengeometrie auf, wobei in einem ersten Abschnitt die Innengeometrie einen, insbesondere runden oder ovalen, Querschnitt mit gleichbleibendem Durchmesser aufweist und in einem zweiten Abschnitt derart an zwei sich gegenüberliegenden Flanken und/oder Seiten konvergierend ausgebildet ist, dass die Auslassöffnung 5 annähernd rechteckig und/oder kissenförmig ausgebildet wird. Die Außengeometrie der Getränkeauslassdüse 2 ist mit Flanken 11 ausgebildet, welche ebenso auf die Auslassöffnung 5 konvergierend und/oder spitz zulaufend ausgebildet sind. Vorteilhaft ist die Getränkeauslassdüse 2 als Ventil, insbesondere im weitesten Sinne mit der geometrischen Form eines Entenschnabelventils, ausgebildet. Hierdurch wird ein Getränkestrahl, welcher durch die Getränkeauslassdüse 2 abgegeben wird, besonders kompakt gehalten, wobei die durch die konvergierend verlaufende Außengeometrie und/oder Innengeometrie der Getränkeauslassdüse 2 resultierende geringe Wandstärke im Bereich Auslassöffnung 5 und/oder scharfe Kante der Auslassöffnung 5, die Haftung des Getränkestrahls an der Auslassöffnung 5 verringert. Somit bleibt der abgegebene Getränkestrahl unabhängig der Strömungsgeschwindigkeit für eine größere Distanz kontinuierlich, bevor er sich in Tropfen auflöst.

Des Weiteren ist eine Heißwasserauslassdüse 6 umfasst, durch welche ein Heißwasserstrahl abgegeben werden kann. In dieser Ausführung ist die Heißwasserauslassdüse 6 mit einem runden Querschnitt ausgebildet, wobei auch denkbar ist, die Heißwasserauslassdüse 6 baugleich zu der Getränkeauslassdüse 2 und/oder ebenso mit konvergierender Innengeometrie und/oder Außengeometrie auszubilden. In dieser Ausführungsform ist die Getränkeauslassdüse 2 mit einer größeren Länge entlang einer Längenerstreckung L (siehe Fig. 3a) als die Heißwasserauslassdüse 6 ausgebildet, wobei auch eine Ausführung mit gleicher Länge möglich ist.

Am Grundkörper 9 ist eine wannenförmige Einformung 12 mit abgerundeten Wannenrändern 12.1 ausgebildet, wodurch sich sammelnden Getränkereste entlang der Wannenränder geführt werden und durch den Abriss der Oberflächenhaftung an der Kante 12.2, zum Beispiel in eine Tropfschale der Getränkezubereitungsvorrichtung, abtropfen.

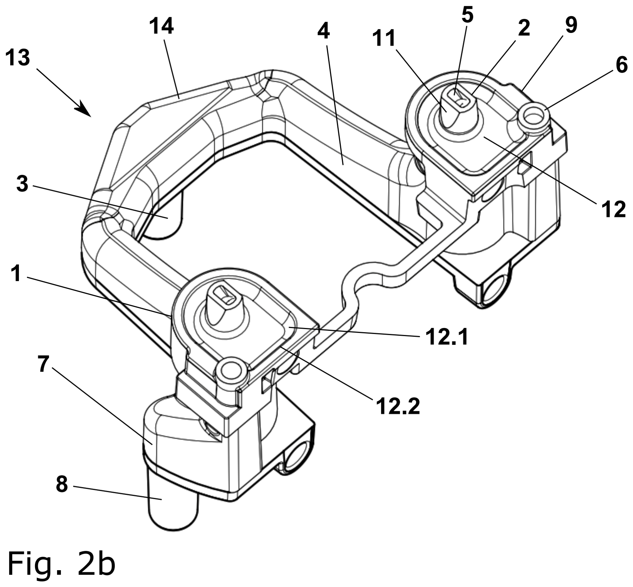

Die Fig. 2a zeigt eine Auslassbaugruppe 13 in einer Seitenansicht und die Fig. 2b in einer Ansicht von der Unterseite. Die Auslassbaugruppe 13 umfasst zwei Getränkeauslässe 1 mit jeweils einer Getränkeauslassdüse 2, mit konvergierender Innengeometrie und Außengeometrie mit spitz zulaufenden Flanken 11, welch erhaben, annährend senkrecht an einem Grundkörper 9 ansitzend ausgebildet sind. Des Weiteren sind an den Grundkörpern 9 jeweils Heißwasserauslassdüsen 6 ausgebildet, welche in dieser Ausführung einen runden Querschnitt aufweisen, wobei auch eine Ausführung mit konvergierender Innengeometrie möglich ist. Um die Getränkeauslassdüse 2 herum sind am Grundkörper 9 wannenförmige Einformungen 12 angeordnet, mit abgerundeten Wannenrändern 12.1. Durch diese Einformungen 12 werden sich sammelnden Getränkereste entlang der Wannenränder 12.1 geführt und tropfen durch den Abriss der Oberflächenhaftung an der Kante 12.2, zum Beispiel in eine Tropfschale der Getränkezubereitungsvorrichtung, ab.

Die Getränkeauslässe 1 sind fluidtechnisch mit einer gemeinsamen ersten Fluidleitung 4 ausgebildet, welche in einem insgesamt annährend U-förmigen und/oder hufeisenförmigen Fluidkörper 14 ausgebildet wird. Die Auslassbaugruppe 13 weist hierbei einen ersten Eingang 3 auf, welcher mit einem Getränkekanal einer Getränkezubereitungsvorrichtung verbindbar ist. Der Fluidkörper 14 ist spiegelsymmetrisch mit einer Gabelung ausgebildet, welche die erste Fluidleitung 4 in zwei Fluidpfade aufteilt, von welchen jeweils einer zu einer Getränkeauslassdüse 2 führt.

Die Heißwasserauslassdüsen 6 sind jeweils mit unabhängigen Fluidpfaden der zweiten Fluidleitung 7 verbunden, mit einem jeweils eigenen zweiten Eingang 8, welche mit einem Heißwasserkanal einer Getränkezubereitungsvorrichtung verbindbar ausgebildet sind. Die zweite Fluidleitung 7 umfasst also in anderen Worten zwei parallele Fluidpfade, welche nicht von einem gemeinsamen Ursprung ausgehen.

### Bezugszeichen

- 1: Getränkeauslass
- 2: Getränkeauslassdüse
- 3: Erster Eingang
- 4: Erste Fluidleitung
- 5: Auslassöffnung
- 6: Heißwasserauslassdüse
- 7: Zweite Fluidleitung
- 8: Zweiten Eingang
- 9: Grundkörper
- 11: Flanken
- 12: Wannenförmige Einformung
- 12.1: Wannenrand
- 12.2: Kante der Einformung
- 13: Auslassbaugruppe
- 14: Fluidkörper

## Patentansprüche

1. Getränkeauslass, zur Verwendung an einer Getränkezubereitungsvorrichtung, insbesondere eine Kaffee- oder Espressomaschine, mit einem Getränkeauslasskanal,
umfassend wenigstens eine Getränkeauslassdüse (2), wobei der Getränkeauslass (1) eine erste Fluidleitung (4) zwischen einem ersten Eingang (3) zur Verbindung mit dem Getränkeauslasskanal und der Getränkeauslassdüse (2) ausbildet, und wobei die erste Fluidleitung (4) zur Führung eines Getränks ausgebildet ist,
**dadurch gekennzeichnet,**
**dass** die wenigstens eine Getränkeauslassdüse (2) eine wenigstens abschnittsweise zu einer Auslassöffnung (5) hin konvergierende Innengeometrie aufweist, zur Bereitstellung eines weitestgehend tropffreien Getränkestrahls.

2. Getränkeauslass nach Anspruch 1,
**dadurch gekennzeichnet, dass** eine Heißwasserauslassdüse (6) umfasst ist, wobei der Getränkeauslass (1) eine zweite Fluidleitung (7) zwischen einem zweiten Eingang (8) zur Verbindung mit einem Heißwasserkanal und der Heißwasserauslassdüse (6) ausbildet, wobei die Heißwasserauslassdüse (6) bevorzugt eine wenigstens abschnittsweise zu einer Auslassöffnung hin konvergierende Innengeometrie aufweist.

3. Getränkeauslass nach einem der Ansprüche 1 oder 2,
**dadurch gekennzeichnet,**
**dass** die Getränkeauslassdüse (2) und/oder Heißwasserauslassdüse (6) gegenüber einem Grundkörper (9) des Getränkeauslasses (1) erhaben und/oder dem Grundkörper (9) aufsitzend ausgebildet sind.

4. Getränkeauslass nach einem der Ansprüche 1 bis 3,
**dadurch gekennzeichnet,**
**dass** der Getränkeauslass (1) wenigstens teilweise, insbesondere vollständig, aus einem Silikon und/oder einem hydrophoben Material ausgebildet ist.

5. Getränkeauslass nach einem der Ansprüche 1 bis 4,
**dadurch gekennzeichnet,**
**dass** die Innengeometrie der Getränkeauslassdüse (2) und/oder Heißwasserauslassdüse (6) derart ausgebildet ist, dass der Innendurchmesser in einem ersten Abschnitt gleichbleibend und in einem zweiten Abschnitt zur Auslassöffnung (5) hin konvergierend ausgebildet ist.

6. Getränkeauslass nach einem der Ansprüche 1 bis 5,
**dadurch gekennzeichnet,**
**dass** die Getränkeauslassdüse (2) und/oder Heißwasserauslassdüse (6) mit einer abschnittsweise zu Auslassöffnung (5) hin konvergierenden Außengeometrie, insbesondere mit sich zur Auslassöffnung (5) hin verengenden, bevorzugt scharfkantigen, Flanken (11), ausgebildet sind.

7. Getränkeauslass nach Anspruch 3,
**dadurch gekennzeichnet,**
**dass** der Grundkörper (9) eine, insbesondere wannenförmige, bevorzugt die Getränkeauslassdüse umfangseitig umgebende, Einformung (12) aufweist.

8. Getränkeauslass nach einem der Ansprüche 1 bis 7,
**dadurch gekennzeichnet,**
**dass** die Getränkeauslassdüse (2) entlang einer Längenrichtung (L) länger als die Heißwasserauslassdüse (6) und/oder gegenüber der Heißwasserauslassdüse (6) hervorstehend ausgebildet ist.

9. Auslassbaugruppe, zur Verwendung an einer Getränkezubereitungsvorrichtung, insbesondere eine Kaffee- oder Espressomaschine, mit einem Getränkeauslasskanal,
**gekennzeichnet durch**,
wenigstens zwei Getränkeauslässe (1) nach einem der Ansprüche 1 bis 8.

10. Auslassbaugruppe nach Anspruch 9,
**dadurch gekennzeichnet,**
**dass** die Getränkeauslässe (1) und/oder Grundkörper (9) monolithisch miteinander verbunden ausgebildet sind.

11. Auslassbaugruppe nach Anspruch 9 oder 10,
**dadurch gekennzeichnet,**
**dass** die erste und/oder zweite Fluidleitung (4, 7) eine Mehrzahl von Fluidpfaden ausbildet, insbesondere eine Anzahl von Fluidpfaden welche der Anzahl von Getränkeauslassdüsen (2) und/oder Heißwasserauslassdüsen (6) entspricht, welche ausgehend von dem ersten und/oder zweiten Eingang (3, 8) ausgebildet sind oder von jeweils eigenständigen Eingängen zur Verbindung mit dem Getränkeauslasskanal und/oder Heißwasserkanal ausgebildet sind.

12. Auslassbaugruppe nach Anspruch 11,
**dadurch gekennzeichnet,**
**dass** die Auslassbaugruppe mit symmetrischen Fluidpfaden ausgebildet ist.

13. Getränkezubereitungsvorrichtung, insbesondere Kaffeemaschine und/oder Espressomaschine, mit einem Getränkeauslasskanal, **gekennzeichnet durch**, einen Getränkeauslass (1) nach einem der Ansprüche 1 bis 8 und/oder eine Auslassbaugruppe (13) nach einem der Ansprüche 9 bis 12.

14. Verfahren zum Betrieb eines Getränkeauslasses (1) an einer Getränkezubereitungsvorrichtung, insbesondere eine Kaffee- oder Espressomaschine, mit einem Getränkeauslasskanal,
umfassend ein Verbinden des Getränkeauslasskanals mit wenigstens einer Getränkeauslassdüse (2), durch eine erste Fluidleitung (4) zwischen einem ersten Eingang (3) des Getränkeauslasses (1) zur Verbindung mit dem Getränkeauslasskanal und der Getränkeauslassdüse (2), und ein Führen eines Getränks durch die erste Fluidleitung (4),
**gekennzeichnet durch**,
ein Ausgeben eines weitestgehend tropffreien Getränkestrahls, **durch** eine wenigstens abschnittsweise zu einer Auslassöffnung (5) hin konvergierende Innengeometrie der Getränkeauslassdüse (2).

15. Verfahren nach Anspruch 14,
**gekennzeichnet durch**
ein Verbinden eines Heißwasserkanals mit wenigstens einer Heißwasserauslassdüse (6), **durch** eine zweite Fluidleitung (7) zwischen einem zweiten Eingang (8) zur Verbindung mit dem Heißwasserkanal und der Heißwasserauslassdüse (6), und ein Führen des Heißwassers **durch** die zweite Fluidleitung (7) und ein Ausgeben eines weitestgehend tropffreien Heißwasserstrahls, **durch** eine wenigstens abschnittsweise zu einer Auslassöffnung hin konvergierende Innengeometrie der Heißwasserauslassdüse (6).
